Europäisches Patentamt

European Patent Office

Office européen des brevets

(19)

(11) Veröffentlichungsnummer: **0 259 595 B1**

(12) **EUROPÄISCHE PATENTSCHRIFT**

(45) Veröffentlichungstag der Patentschrift: **23.10.91**

(51) Int. Cl.5: **A01C 7/10**

(21) Anmeldenummer: **87111081.3**

(22) Anmeldetag: **31.07.87**

(54) **Verteilmaschine.**

(30) Priorität: **06.09.86 DE 3630409**

(43) Veröffentlichungstag der Anmeldung:
**16.03.88 Patentblatt 88/11**

(45) Bekanntmachung des Hinweises auf die
Patenterteilung:
**23.10.91 Patentblatt 91/43**

(84) Benannte Vertragsstaaten:
**AT FR GB IT SE**

(56) Entgegenhaltungen:
**DE-A- 3 119 526**
**DE-A- 3 319 833**
**FR-A- 1 217 517**
**FR-A- 2 254 454**
**GB-A- 609 990**

(73) Patentinhaber: **Amazonen-Werke H. Dreyer
GmbH & Co. KG
Am Amazonenwerk 9-13
W-4507 Hasbergen-Gaste(DE)**

(72) Erfinder: **Steenken, Bernhard
Waldhöfe 17
W-4475 Sögel 2(DE)**

EP 0 259 595 B1

Beschreibung

Die Erfindung betrifft eine Verteilmaschine zum Ausbringen von pulverigem und/körnigem Material gemäß des Oberbegriffes des Anspruches 1.

Eine derartige Vertelimaschine ist bereits durch die DE-PS 33 22 200 bekannt geworden. Um bei dieser Verteilmaschine den genauen Arbeitsbereich des Freilaufgetriebes für kleine und kleinste Ausbringmengen pro Flächeneinheit auszunutzen, ist zwischen dem Freilaufgetriebe und der Dosierwelle ein Vorgelegegetriebe angeordnet. Hierdurch ist es durch Veränderung des Übersetzungsverhältnisses mit Hilfe des Vorgelegegetriebes möglich, sowohl kleinste, kleine und große Ausbringmengen des auszubringenden Materials mit demselben Freilaufgetriebe exakt einzustellen.

Die konstruktive Gestaltung des bekannten, mit einem Vorgelegegetriebe ausgerüsteten Freilaufgetriebes weist jedoch Nachteile hinsichtlich des Bauvolumens auf. Die Ausgangswelle des Freilaufgetriebes ragt auf beiden Seiten des Gehäuses des Regelgetriebes aus dem Gehäuse über die Lagerungen der Ausgangswelle hinaus, wobei auf der der Dosierwelle abgewandten Seite der Ausgangswelle ein Zahnrad drehfest angeordnet ist und mit dem Zahnrad der parallel zu der Ausgangswelle angeordneten Vorgelegewelle in Wirkverbindung gebracht werden kann, die Anordnung dieser beiden Zahnräder auf den jeweils aus dem Gehäuse des Regelgetriebes herausragenden Wellen führt zu einer Vergrößerung des Breitenmaßes der gesamten Verteilmaschine. Bei Verteilmaschinen mit einer Arbeitsbreite von 3m führt diese Bauweise des mit einem Vorgelegegetriebe ausgerüsteten, als Freilaufgetriebe ausgebildeten Regelgetriebes, welches seitlich neben der Verteilmaschine angeordnet ist, zu einer unzulässigen Vergrößerung des zum Transport auf öffentlichen Straßen und Wegen vorgeschriebenen Höchstbreitenmaßes von 3 m.

Der Erfindung liegt daher die Aufgabe zugrunde, die Baugröße des mit einem Vorgelegegetriebe ausgerüsteten Regelgetriebes im wesentlichen zu verkleinern.

Diese Aufgabe wird erfindungsgemäß durch den kennzeichnenden Teil des Anspruches 1 gelöst. Infolge dieser Maßnahme wird das Bauvolumen des Regelgetriebes nicht durch aus dem Gehäuse des Regelgetriebes herausragende Bauteile des Vorgelegegetriebes vergrößert, so daß das in einem Gehäuse angeordnete, mit einem Vorgelegegetriebe ausgerüstete Regelgetriebe klein baut. Die Bauteile des Vorgelegegetriebes führen also nicht zu einer Vergrößerung des Gesamtbereitenmaßes der Verteilmaschine. Somit ist also das Vorgelegegetriebe in dem Regelgetriebegehäuse integriert und in einer Baueinheit verschmolzen. Dadurch, daß das Vorgelegegetriebe in einem eigenen Gehäuse lösbar in dem Regelgetriebegehäuse angeordnet ist, läßt sich das Vorgelegegetriebe in besonders einfacher Weise montieren bzw. demontieren. Durch die Anordnung des Vorgelegegetriebes in einem eigenen Gehäuse ergibt sich zudem eine einfache Möglichkeit zur Lagerung der jeweiligen Wellen.

Die Ausführsrungsform sieht in erfindungsgemäßer Weise vor, daß die Welle, auf der die Freiläufe des Freilaufgetriebes angeordnet sind, als Hohlwelle ausgebildet ist, daß auf dieser Hohlwelle ein Zahnrad drehfest angeordnet ist, daß parallel zu der Hohlwelle eine Vorgelegewelle angeordnet ist, daß auf dieser Vorgelegewelle eine Doppelzahnrad gelagert ist, daß durch die Hohlwelle die mit der Dosierwelle gekoppelte Abtriebswelle geführt ist, daß die Abtriebswelle auf der der Dosierwelle abgewandten Seite ein Mitnahmeprofil aufweist, welches sich außerhalb der Hohlwelle befindet, und daß auf die Hohlwelle und das Mitnahmeprofil der Abtriebswelle ein eine Nabe ausweisendes umdrehbares Kuppelzahnrad aufsteckbar angeordnet ist.

Weiterhin ist erfindungsgemäß vorgesehen, daß die Hohlwelle auf dem den Mitnahmeprofil der Abtriebswelle benachbarten Ende ein diesem Mitnahmeprofil entsprechendes Profil aufweist.

Die Ausführungsform sieht weiterhin erfindungsgemäß vor, daß das Mitnahmeprofil sich etwa über die halbe Länge der Nabe erstreckt, und daß der übrige Nabenteil eine größere Bohrung aufweist. Infolge dieser Maßnahmem ergibt sich ein einfaches Kuppelelement, daß gleichzeitig als Zahnrad für verschiedene Einsatzfälle ausgebildet ist.

Die erfindungsgemäße Ausführungsform sieht vor, daß das Kuppelzahnrad derart aufsteckbar ist, daß in der einen Position über das Mitnahmeprofil die Hohlwelle und die Antriebswelle unmittelbar miteinander gekoppelt sind und daß in der anderen Position des Kuppelzahnrades, die Zähne des Kuppelzahnrades mit den Zähnen des Doppelzahnrades kämmen und gleichzeitig das Kuppelzahnrad mit der Abtriebswelle gekuppelt ist. Infolge dieser Maßnahme läßt sich auf einfachste Weise eine Veränderung des Übersetzungsverhältnisses herbeiführen.

Des weiteren ist erfindungsgemäß vorgesehen, daß nur zwei Freiläufe und jeweils Exzenterscheiben mit fünf spiegelbildlichen Nocken für das Regelgetriebe vorgesehen sind. Durch die Anordnung von nur zwei Freiläufen verringern sich die Bauteile des bisherigen Regelgetriebes, wodurch gleichzeitig in besonders vorteilhafter Weise Platz für das in dem Gehäuse des Regelgetriebes zu integrierende Vorgelegegetriebegehäuse geschaffen wird. Die mit fünf spiegelbildlichen Nocken versehen Exzenterscheiben wirken sich besonders vorteilhaft hinsichtlich eines ruhigen, gleichmäßigen Dosierwellenlaufes aus.

Weitere Einzelheiten der Erfindung sind der Beispielsbeschreibung und den Zeichnungen zu entnehmen. Hierbei zeigen

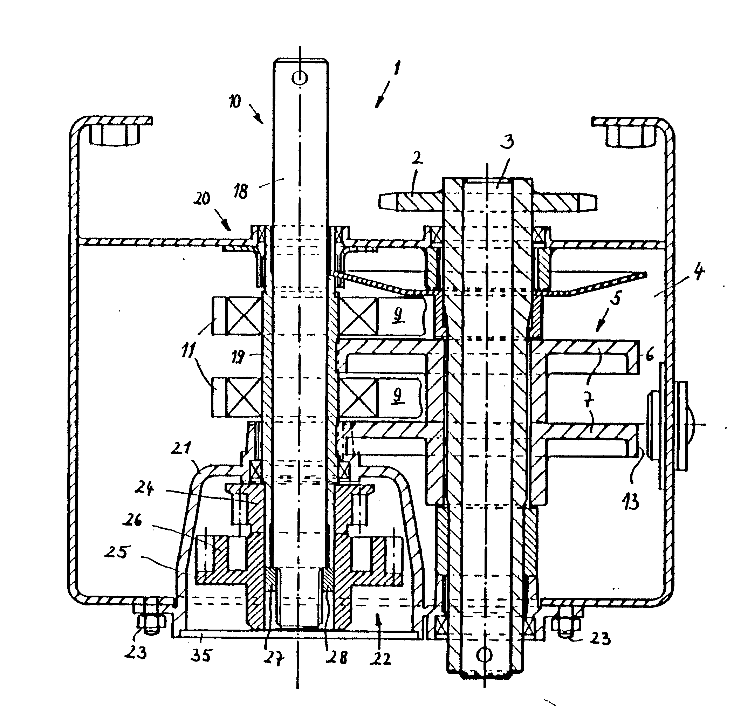

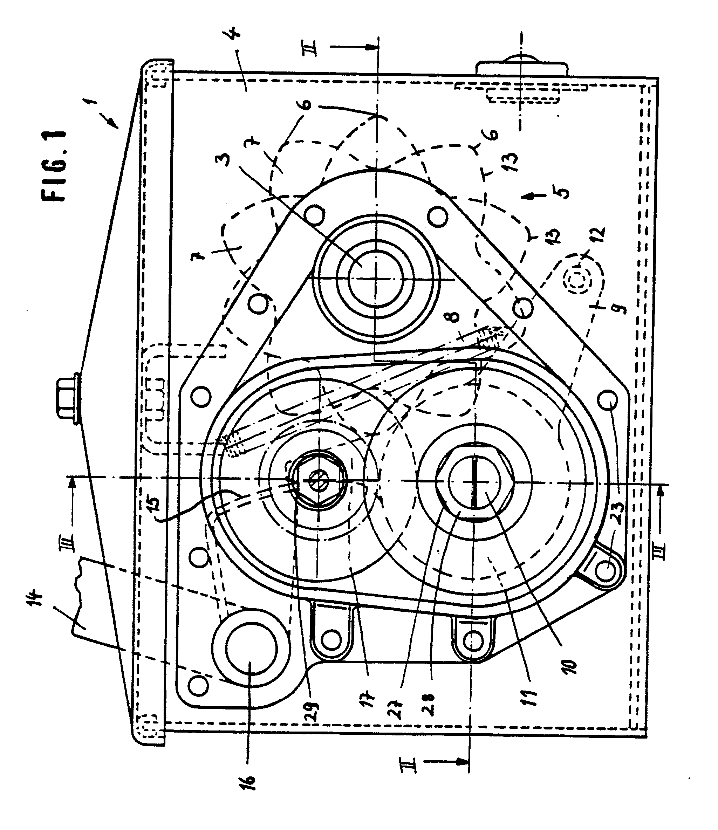

Fig. 1 die erfindungsgemäße Anordnung des Vorgelegegetriebes in dem Gehäuse des Regelgetriebes, wobei der Deckel des Gehäuses des Vorgelegegetriebes abgenommen ist, in der Seitenansicht.

Fig. 2 das erfindungsgemäße Regelgetriebe gemäß Fig. 1 in der Ansicht II-II,

Fig. 3 das in dem separaten Gehäuse angeordnete Vorgelegegetriebe in der Ansicht III-III, wobei das Kuppelzahnrad mit dem Doppelzahnrad der Vorgelegewelle in Wirkverbindung steht, so daß die Antriebsdrehzahl der Dosierwelle untersetzt wird und

Fig. 4 das Vorgelegegetriebe gemäß Fig. 3, wobei die Hohlwelle direkt mit der Abtriebswelle mittels des Kuppelzahnrades verbunden ist.

Die Verteilmaschine ist mit einem bekannten und daher nicht näher dargestellten Vorratsbehälter ausgestattet, wobei sich in dem Vorratsbehälter mehrere quer zur Fahrtrichtung angeordnete Auslauföffnungen befinden. Außerhalb des Vorratsbehälters ist eine bekannte und daher ebenfalls nicht näher dargestellte Dosiervorrichtung vorgesehen, bei der vor jeder Auslauföffnung ein Dosierrad angeordnet ist. Diese Dosierräder sind auf einer drehbar an dem Vorratsbehälter gelagerten Dosierwelle drehfest angebracht, wobei die Dosierräder von den Dosiergehäusen teilweise umgeben sind. Der Antrieb der Dosierwelle und damit der Dosierräder erfolgt von einem der Laufräder, mit dem sich die Verteilmaschine auf den Boden abstützt. Mit Hilfe eines bekannten Kettentriebes wird das als Freilaufgetriebe ausgebildete Regelgetriebe 1 von dem auf den Boden ablaufenden Laufrad angetrieben.

Über den mit dem Kettenrad 2 zusammenwirkenden Kettentrieb wird die Eingangswelle 3 des Regelgetriebes 1 angetrieben. Im inneren des Gehäuses 4 des Regelgetriebes 1 befindet sich der Exzentermechanismus 5, der die auf der Eingangswelle 3 hintereinander angeordneten, jeweils mit fünf spiegelbildlichen Nocken 6 ausgestatteten beiden Exzenter 7 aufweist. Mit den Exzentern 7 tritt jeweils ein mit Hilfe der jeweiligen Feder 8 elastisch anlenkbarer Hebelarm 9, der auf der Ausgangswelle 10 des Regelgetriebes 1 gelagerten Freilaufgehäuse 11, in Wirkverbindung. Hierbei rollt die jeweils an den Hebelarmen 9 angeordnete Rolle 12 um Umfang 13 der Exzenter 7 ab, so daß das Freilaufgehäuse 11 während einer Umdrehung der Eingangswelle 3 durch den Exzentermechanismus 5 zehnmal ausgelenkt wird, wodurch die Ausgangswelle 10 in Rotation versetzt wird. Oberhalb der Freilaufgehäuse 11 ist das an dem Verstellhebel 14 angeordnete Anschlagelement 15 auf der Verstellhebelwelle 16 schwenkbar gelagert. An diesem Anschlagelement 15 kommt das jeweilige obere Teil 17 der Freilaufgehäuse 11 zur Anlage und begrenzt so den Auslenkweg der Freilaufgehäuse 11. Über den jeweiligen Auslenkbereich der Freilaufgehäuse 11 läßt sich die Drehzahl der Ausgangswelle 10, die proportional einer bestimmten Ausbringmenge des auszubringenden Materials ist, einstellen. Das Ein- bzw. Verstellen der Ausbringmenge erfolgt über den Verstellhebel 14, der mit einer an der Verteilmaschine angeordneten Einstellskala zusammenwirkt, so daß sich die jeweils gewünschte Ausbringmenge von "Null" bis zu einem Maximalwert stufenlos einstellen läßt. In der eingezeichneten Lage befindet sich der Verstellhebel 14 in 0-Stellung.

Die Ausgangswelle 10 besteht aus der Abtriebswelle 18 und der Hohlwelle 19, wobei die Abtriebswelle 18 drehbar in der Hohlwelle 19 und die Hohlwelle 19 wiederum drehbar in der Gehäusewandung 20 des Gehäuses 4 bzw. in dem Vorgelegegetriebegehäuse 21 gelagert ist. Hierbei befinden sich die auf der Ausgangswelle 10 angeordneten Freilaufgehäuse 11 in drehfester Verbindung mit der Hohlwelle 19. Das Vorgelegegetriebegehäuse 21 nimmt das Vorgelegegetriebe 22 auf und wird einfach in das Gehäuse 4 des Regelgetriebes 1 eingesetzt und mittels der Schrauben 23 verschraubt, so daß es lösbar im Regelgetriebegehäuse 4 angeordnet ist. In dem Vorgelegegetriebegehäuse 21 befinden sich das auf der Hohlwelle 19 drehfest angeordnete kleine Zahnrad 24 und das als Kuppelzahnrad 25 ausgebildete größere Zahnrad 26, sowie das auf der Abtriebswelle 18 angeordnete, als Sechskantmutter 27 ausgebildete Mitnahmeprofil 28. Weiterhin nimmt das Vorgelegegetriebegehäuse 21 die parallel zu der Ausgangswelle 10 angeordnete Vorgelegewelle 29 auf, auf der das Doppelzahnrad 30 drehbar gelagert ist. Die Vorgelegewelle 29 wird mittels der Schraubverbindungen 31 und 32 in dem Vorgelegegehäuse 21 befestigt. Hierbei weist die Schraubverbindung 32 eine Besonderheit auf. Diese Schraubverbindung 32, die mit der Flügelmutter 33 und der selbstsichernden Mutter 34 ausgerüstet ist, dient auch gleichzeitig zur Befestigung des Deckels 35, mit dem das Vorgelegegetriebegehäuse 21 verschlossen wird. Beim Lösen dieser Schraubverbingung 32 wird durch die selbstsichernde Mutter 34 eine abzieherähnliche Wirkung auf den Deckel 35 ausgeübt, so daß sich der Deckel 35 einfach abnehmen läßt.

Die Wirkungsweise des mit dem Vorgelegegetriebe 22 ausgerüsteten, an der Außenseite der Verteilmaschine angeordneten Regelgetriebes 1 läßt sich folgendermaßen beschrieben:

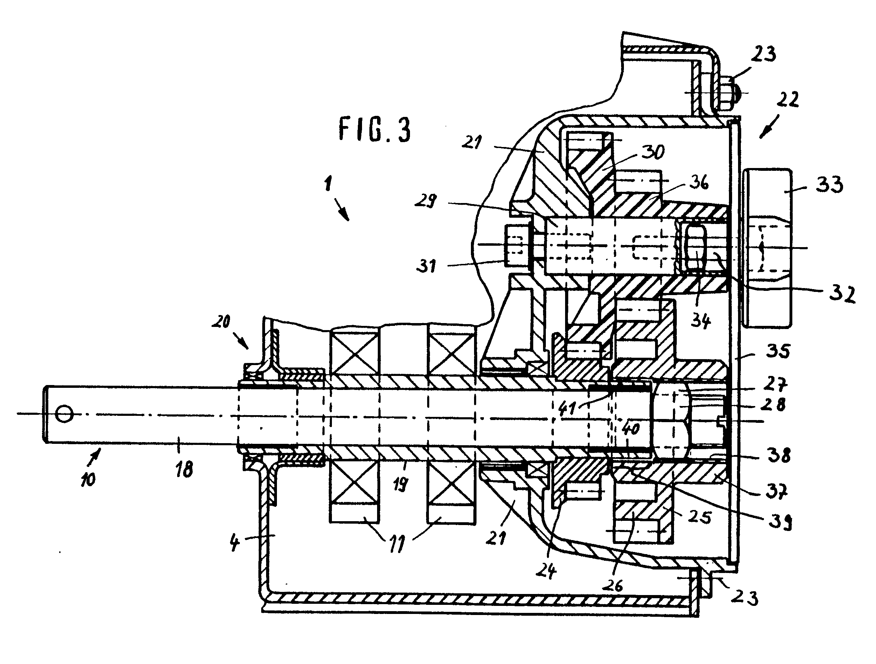

Der Antrieb der Ausgangswelle 10 erfolgt von der Eingangswelle 3, wobei die Rotation der Eingangswelle 3 mittels des Exzentermechanismus 5 zu einer bestimmten Auslenkung der Freilaufgehäuse 11 und somit zum Antrieb der Hohlwelle 19, auf der die Freilaufgehäuse 11 drehfest angeordnet sind, führt. Die Hohlwelle 19 rotiert also mit einer der jeweiligen Einstellung des Verstellhebels 14 entsprechenden Drehzahl. Gemäß Fig. 3 wird die Drehbewegung der Hohlwelle 19 auf das drehfest auf dieser Welle 19 angeordnete Zahnrad 24 und von hier auf das auf der Vorgelegewelle 21 drehbar gelagerte Doppelzahnrad 30 übertragen. Hierbei findet infolge der Abmessungen der hier ineinander kämmenden Zahnräder eine Untersetzung der Drehzahl statt. Das kleinere Zahnrad 36 des Doppelzahnrades 30 der Vorgelegewelle 29 kämmt mit den Zähnen des Kuppelzahnrades 25, wobei eine weitere Untersetzung der Antriebsdrehzahl der Hohlwelle 19 erfolgt. Über das Kuppelzahnrad 25 wird die Drehbewegung auf die Abtriebswelle 18, die mit der nicht dargestellten Dosierwelle der Verteilmaschine verbunden ist, übertragen. Hierbei wirkt das sich etwa über die halbe Länge der Nabe 37 erstreckende Mitnahmeprofil 38 des Kuppelzahnrades 25, daß als sechskantige Bohrung ausgebildet ist, mit dem als Sechskantmutter 27 ausgebildeten Mitnahmeprofil 28 der Abtriebswelle 18 zusammen. Das verbleibende Nabenteil 39 der Nabe 37 ist als größere Bohrung 40 ausgebildet, so daß es gemäß Fig. 3 nicht mit dem auf der Hohlwelle 29 angeordneten Mitnahmeprofil 41 zusammenwirkt.

Gemäß Fig. 3 verläuft der Kraftfluß von der Eingangswelle 3 zunächst auf die Hohlwelle 29, wird dann über das Vorgelegegetriebe 22 mittels des Kuppelzahnrades 25 auf die Abtriebswelle 18 übertragen. Hierbei wird die Drehzahl, mit welcher die Hohlwelle 19 entsprechend der jeweiligen Stellung des Verstellhebels 14 angetrieben wird, ins "Kleine" untersetzt. D.h., die relativ hohe Drehzahl der Hohlwelle 19 wird nun um das Übersetzungsverhältnis reduziert, so daß sich für die Abtriebswelle 18 und somit für die mit dieser Welle 18 gekoppelten Dosierwelle eine kleinere Drehzahl ergibt. Somit läßt sich der relativ genaue Einstellbereich des als Freilaufgetriebe ausgebildeten Regelgetriebes 1 auch für kleine und kleinste Ausbringmengen ausnutzen.

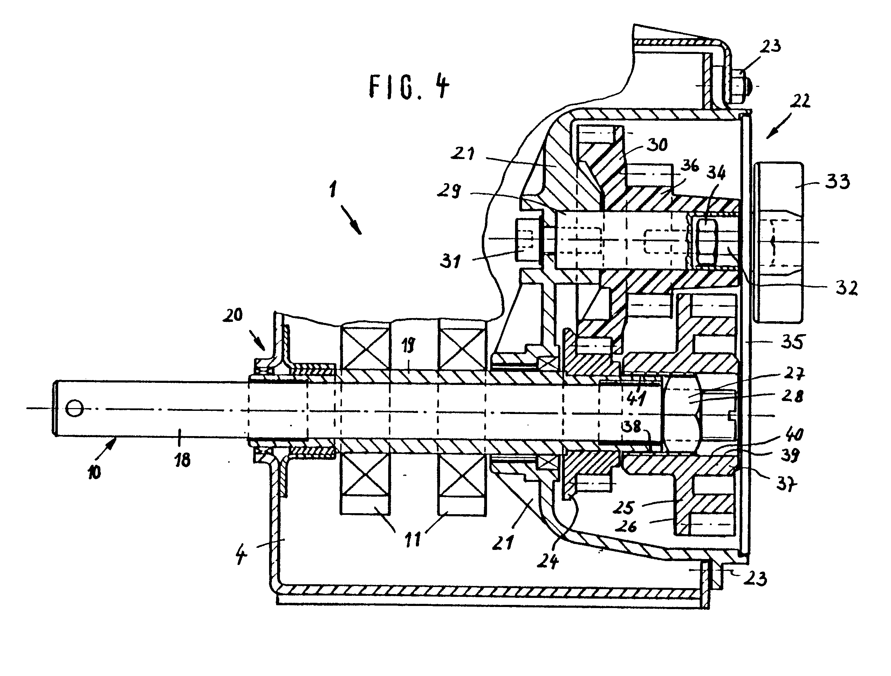

Sollen jedoch große Ausbringmengen mit der Verteilmaschine ausgebracht werden, so wird der Deckel 35 des Vorgelegegetriebeghäuses 21 abgenommen und das Kuppelzahnrad 25 umgedreht. Dieses Umdrehen des Kuppelzahnrades 25 gemäß Fig. 4 bewirkt, daß die Hohlwelle 19 unmittelbar mit der Abtriebswelle 18 verbunden und die Wirkung des Vorgelegegtriebes 22 aufgehoben ist, so daß die Abtriebswelle 18 mit der gleichen Drehzahl, die die Hohlwelle 19 aufweist, angetrieben wird. Die direkte Koppelung der Hohlwelle 19 mit der Abtriebswelle 18 wird durch das Zusammenwirken der einzelnen Mitnahmeprofile 28, 38 und 41 herbeigefügt.

Durch die Integration des Vorgelegegetriebegehäuses 21 des Vorgelegegetriebes 22 innerhalb des Regelgetriebegehäuses 4 wird eine sehr kompakte Bauweise des Regelgetriebes 1 erreicht, so daß die Ausrüstung des Regelgetriebes 1 mit einem Vorgelegegetriebe 22 nicht zur Vergrößerung des Gesamtbereitenmaßes der Verteilmaschine durch außerhalb des Regelgetriebegehäuses angeordnete Bauteile des Vorgelegegetriebes führt.

**Patentansprüche**

1. Verteilmaschine zum Ausbringen von pulverigem und/oder körnigem Material, insbesondere Sämaschine, mit zumindest einer mittels Bodenrad über ein in einem Gehäuse angeordneten Regelgetriebe regelbar angetriebenen Dosierwelle, wobei zwischen dem Regelgetriebe und der Dosierwelle ein Vorgelegegetriebe angeordnet ist, dadurch gekennzeichnet, daß das Vorgelegegetriebe (22) in einem eigenen und mit einem Deckel (35) verschlossenen Gehäuse (21) innerhalb des Regelgetriebegehäuses (4) angeordnet ist, daß die Welle, auf der die Freiläufe des Freilaufgetriebes (11) angeordnet sind, als Hohlwelle (19) ausgebildet ist, daß auf dieser Hohlwelle (19) ein Zahnrad (24) drehfest angeordnet ist, daß parallel zu der Hohlwelle (19) eine Vorgelegewelle (29) angeordnet ist, daß auf dieser Vorgelegewelle (29) ein Doppelzahnrad (30) gelagert ist, daß durch die Hohlwelle (19) die mit der Dosierwelle gekoppelte Abtriebswelle (18) geführt ist, daß die Abtriebswelle (18) auf der der Dosierwelle abgewandten Seite ein Mitnahmeprofil (28) aufweist, welches sich außerhalb der Hohlwelle (19) befindet, und daß auf die Hohlwelle (19) und das Mitnahmeprofil (19) der Abtriebswelle (18) ein eine Nabe (37) aufweisendes umdrehbares Kuppelzahnrad (25) aufsteckbar angeordnet ist.

2. Verteilmaschine nach Anspruch 1, dadurch gekennzeichnet, daß das Gehäuse (21) des Vorgelegegetriebes (22) lösbar in dem Regelgetriebegehäuse (4) angeordnet ist.

3. Verteilmaschine nach Anspruch 1, dadurch gekennzeichnet, daß die Hohlwelle (19) auf den dem Mitnahmeprofil (28) der Abtriebswelle (18) benachbarten Ende ein diesem Mitnahmeprofil (28) entsprechendes Profil (41) aufweist.

4. Verteilmaschine nach Anspruch 3, dadurch gekennzeichnet, daß das Kuppelzahnrad (25) ein Mitnahmeprofil (38) aufweist, daß das Mitnahmeprofil (38) sich etwa über die halbe Länge der Nabe (37) erstreckt, und daß der übrige Nabenteil (39) eine größere Bohrung (40) aufweist.

5. Verteilmaschine nach den Ansprüchen 2 bis 4, dadurch gekennzeichnet, daß das Kuppelzahnrad (25) derart aufsteckbar ist, daß in der einen Position über die Mitnahmeprofile (28,38,41) die Hohlwelle (19) und die Abtriebswelle (18) unmittelbar miteinander gekoppelt sind und daß in der anderen Position des Kuppelzahnrades (25), die Zähne des Kuppelzahnrades (25) mit den Zähnen des Doppelzahnrades (30) kämmen und gleichzeitig das Kuppelzahnrad (25) mit der Abtriebswelle (18) gekuppelt ist.

6. Verteilmaschine nach Anspruch 1, dadurch gekennzeichnet, daß nur zwei Freiläufe (11) und jeweils Exzenterscheiben (7) mit fünf spiegelbildlichen Nocken (6) für das Regelgetriebe (1) vorgesehen sind.

**Claims**

1. A distributor for spreading pulverulent and/or granular material, particularly a sowing machine, with at least one metering shaft adjustably driven by means of a ground wheel through a variable-speed gear located in a housing, a transmission gearing being disposed between the variable-speed gear and the metering shaft, characterised in that the transmission gearing (22) is disposed within its own casing (21), enclosed by a cover (35), within the variable-speed gear casing (4), that the shaft upon which the freewheels of the overrunning clutch (11) are disposed is designed as a hollow shaft (19), that a gearwheel (24) is non-rotarily mounted on this hollow shaft (19), that a transmission-gear shaft (29) is disposed parallel with the hollow shaft (19), that a double gearwheel (30) is mounted on this transmission-gear shaft (29), that the driven shaft (18) coupled to the metering shaft is passed through the hollow shaft (19), the driven shaft (18) has an entrainment profile (28) on the side facing away from the metering shaft, said entrainment profile being located outwith the hollow shaft (19), and that a rotational coupling gearwheel (25) having a hub (37) is disposed so that it can be thrust on to the hollow shaft (19) and the entrainment profile (19) of the driven shaft (18).

2. A distributor according to Claim 1, characterised in that the housing (21) of the transmission gearing (22) is releasably disposed in the variable-speed gear housing (4).

3. A distributor according to Claim 1, characterised in that the hollow shaft (19) has, on the end adjacent to the entrainment profile (28) of the driven shaft (18) a profile corresponding to this entrainment profile (28).

4. A distributor according to Claim 3, characterised in that the coupling gearwheel (25) has an entrainment profile (38) that the entrainment profile (38) extends approximately across half the length of the hub (37), and that the remaining hub portion (39) has a larger bore (40).

5. A distributor according to Claims 2 to 4, characterised in that the coupling gearwheel; (25) may be thrust on in such a way that in one position the hollow shaft (19) and the driven shaft (18) are directly interconnected by the entrainment profiles (28, 38, 41), and that in the other position of the coupling gearwheel (25) the teeth of the coupling gearwheel mesh with the teeth of the double gearwheel (30), and the coupling gearwheel (25) is simultaneously coupled with the driven shaft (18).

6. A distributor according to Claim 1, characterised in that only two freewheels (11) and respective eccentric discs (7) are provided with five mirror-inverted cams (6) for the variable-speed gear (1).

**Revendications**

1. Distributeur pour délivrer une matière pulvérulente et/ou en grains, en particulier un semoir, comportant au moins un arbre de dosage entraîné, avec réglage possible, par une roue d'appui au sol par l'intermédiaire d'une commande à réglage placée dans un carter, un mécanisme de transmission étant interposé entre la commande à réglage et l'arbre doseur, distributeur caractérisé

   - en ce que la commande de transmission (22) est placée dans un carter (21) approprié et fermé par un couvercle (35) situé à l'intérieur du carter de la commande de réglage (4),
   - en ce que l'arbre sur lequel sont placées les roues libres du mécanisme à roue libre (11) est réalisé comme arbre creux (19),
   - en ce que sur cet arbre creux (19) est placée une roue dentée (24), solidaire en rotation,

- en ce qu'en parallèle avec l'arbre creux (19) est disposé un arbre de transmission (29),

- en ce que sur cet arbre de transmission (29) est montée une double roue dentée (30),

- en ce qu'au moyen de l'arbre creux (19) est guidé un arbre entraîné (18) accouplé à l'arbre de dosage,

- en ce que l'arbre de sortie (18) comporte du côté éloigné de l'arbre de dosage un profil d'entraînement (28), qui se trouve en dehors de l'arbre creux (19), et

- en ce que sur l'arbre creux (19) et sur le profil d'entraînement (28) de l'arbre entraîné (18) est placée par emboîtement une roue dentée d'accouplement (25), comportant un moyeu (37) et pouvant être retournée.

2. Distributeur selon la revendication 1, caractérisé en ce que le carter (21) du mécanisme d'entraînement (22) est disposé dans le carter de la commande de réglage (4) et peut en être détaché.

3. Distributeur selon la revendication 1, caractérisé en ce que l'arbre creux (19) comporte à l'extrémité voisine du profil d'entraînement (28) de l'arbre entraîné (18) un profil (41) correspondant à ce profil d'entraînement (28).

4. Distributeur selon la revendication 3, caractérisé en ce que la roue dentée d'accouplement (25) comporte un profil d'entraînement (38), en ce que le profit d'entraînement (38) s'étend à peu près sur toute la demi-hauteur du moyeu (37), et en ce que la partie restante du moyeu (39) comporte un alésage plus grand (40).

5. Distributeur selon les revendications 2 à 4, caractérisé en ce que la roue dentée d'accouplement (25) est emboîtable, de façon que dans une des positions l'arbre creux (19) et l'arbre entraîné (18) se trouvent directement accouplés par l'intermédiaire des profils d'entraînement (28, 38, 41) et que dans l'autre position de la roue dentée d'accouplement (25) les dents de la roue dentée d'accouplement (25) engrènent avec les dents de la double roue dentée (30) et dans ces conditions la roue dentée d'accouplement (25) se trouve accouplée à l'arbre entraîné (18).

6. Distributeur selon la revendication 1, caractérisé en ce que seulement deux roues libres (11) et respectivement deux disques d'excentrique (7) avec chacun cinq cames (6) symétriques sont prévus pour la commande de réglage (1).

FIG.1

FIG. 4

EP 0 259 595 B1